# EUROPÄISCHE PATENTANMELDUNG

(11) **EP 2 594 707 A2**
(43) Veröffentlichungstag der Anmeldung: **22.05.2013**
(21) Anmeldenummer: 12181364.6
(22) Anmeldetag: 22.08.2012
(51) Int. Cl.: E04H 6/02, E04H 1/12, B60L 11/18, F24J 2/04, H01L 31/048

(54) **Carport mit Solarmodulen**

(30) Priorität: 14.11.2011 DE 102011118637
(71) Anmelder: Solperis GmbH, 99326 Stadtilm (DE)
(72) Erfinder: Bertagnolli, Karina, 99423 Weimar (DE); Langer, Holger, 99326 Stadtilm (DE)
(74) Vertreter: Grünecker, Kinkeldey, Stockmair & Schwanhäusser

(57) **Zusammenfassung**

Die vorliegende Erfindung betrifft einen verbesserten Carport (1) mit auf dem Dach (4) angeordneten Solarmodulen (5). Durch eine einfache Konstruktion, bei der die tragenden Teile zusätzliche Funktionen übernehmen, kann der erfindungsgemäße Solarcarport besonders kostengünstig hergestellt werden und bietet gleichzeitig einen verbesserten Wetterschutz. Vorzugsweise ist weiterhin eine Plane (8) als innerer Abschluss des Carports vorgesehen.

## Beschreibung

Die Erfindung betrifft einen Carport zum Unterstellen eines Kraftfahrzeugs mit zumindest einem Träger und einer Dachkonstruktion, auf der wenigstens ein Solarmodul befestigt ist.

Ein Carport dient beispielsweise dem Schutz mindestens eines Fahrzeuges gegen Regen, Schnee, Hagel, etc. Dabei handelt es sich in der Regel um eine Holzkonstruktion, mit einem Dach, das an vier Ecken des Carports durch Stützen getragen wird. Alternativ kann die Konstruktion auch aus Stahl oder Aluminium oder Kunststoffen oder einem anderen tragfähigen Material bestehen. In letzter Zeit werden Carports angeboten, die mit Hilfe von auf dem Dach angeordneten Solarmodulen zum einen Energie zur Einspeisung gewinnen und zum anderen umweltfreundliche Energie sofort bereitstellen können. Dadurch kann der Carport zum Beispiel als "Tankstelle" für Fahrzeuge mit Elektroantrieb verwendet werden und zum anderen zur Stromgewinnung.

Carportsyteme werden derzeit weitestgehend als Carportaufbausätze oder als Produkte von Stahlbau- und Betonunternehmen angeboten.

Diese Carports verfügen über Fundamente, welche sich in der Regel im Erdreich und zum Teil darüber erstrecken. Auf diesen Fundamenten baut eine Stützentragstruktur auf, die in der Regel aus 4 Stützelementen besteht. Über den Stützen wird ein Dachtragwerk aus Sparren und Pfetten ausgebildet, das eine Blecheindeckung oder eine andere Hartdacheindeckung aufnehmen kann. Die jeweilige Dacheindeckung bildet die Auflager- und Befestigungsfläche für die Unterkonstruktion zur Aufnahme der Solarmodule. Eine Verkabelung der Module erfolgt an der Unterkonstruktion auf der Dacheindeckung.

Ferner ist aus dem Stand der Technik bekannt, bei einem Carport mit Solarmodulen unterhalb der Module Blech, zum Beispiel ein Trapezblech, anzuordnen. Dieses dient wie das zuvor beschriebene Wellblech als Dach- und Abdichtungsebene sowie zur Aufnahme einer Unterkonstruktion und/oder Modulklemmen zur Aufnahme von Solarmodulen. Ferner bildet das Blech einen inneren Abschluss des Carports (insbesondere an der Dachunterseite).

Derartige Konstruktionen sind jedoch schwer und weisen viele Bestandteile auf, die die Montagezeit und -dauer erhöhen. Auch muss beispielsweise ein Well- bzw. Trapezblech, wenn es zwischen der Dachunterkonstruktion und den Solarmodulen angebracht ist, angebohrt werden, um eine Befestigung der Solarmodule auf der Konstruktion zu ermöglichen. Dies führt allerdings dazu, dass Bohrungen in die kontinuierliche Fläche eingebracht werden, die vor Regenwasser schützen soll. Folglich sind auch hier aufwendige Lösungen notwendig um eine Dichtigkeit gegen Wasser zu gewährleisten.

Aufgabe der vorliegenden Erfindung ist es daher, einen verbesserten Solar-Carport anzugeben, welcher den konstruktiven Aufbau eines Carports vereinfacht und den Schutz vor Witterungseinflüssen verbessert.

Dies wird mit den Merkmalen der unabhängigen Patentansprüche erreicht.

Weitere vorteilhafte Ausführungsformen der vorliegenden Erfindung sind Gegenstand von Unteransprüchen.

Gemäß einem ersten Aspekt der Erfindung ist es vorgesehen, einen Carport zum Unterstellen eines Kraftfahrzeugs mit zumindest einem Träger und einer Dachkonstruktion, auf der wenigstens ein Solarmodul befestigt ist, mit einem spannbaren Element zu versehen. Dieses bildet vorzugsweise einen inneren bzw. unteren Abschluss der Dachkonstruktion.

Eine solche Konstruktion hat zunächst gegenüber der herkömmlichen Verwendung von Blechen den Vorteil, dass sie leichter, und flexibler in der Handhabung beim Transport und beim Einbau ist.

Somit kann das spannbare Element als Dach- und Abdichtungsebene dienen um ein vollkommen wasserdichtes Dach zu gewährleisten, indem das spannbare Element aus einem geeigneten wasserdichten Material gefertigt wird.

Der erfindungsgemäße Gedanke geht somit dahin, dass als oberer Abschluss auf der Dachkonstruktion Solarmodule angeordnet werden können und unterhalb der Dachkonstruktion als unterer Abschluss der Dachunterkonstruktion das spannbare Element befestigt werden kann. So gesehen können die Solarmodule einen oberen bzw. äußeren Abschluss und das spannbare Element einen unteren bzw. inneren Abschluss der Dachkonstruktion bilden.

Vorteilhafter Weise ist das spannbare Element als Folie, Plane, Gewebebahn oder Gewirke ausgebildet. Eine derartige Ausgestaltung ermöglicht es auf einfache Weise, das spannbare Element flexibel auszubilden. Auch ist dies eine simple Art, eine derartige Konstruktion zugleich wetterfest auszuführen. Im Falle einer flexiblen Ausführung kann eine derartige Konstruktion leicht transportiert werden, da diese aufrollbar ausgestaltet werden kann. Auch kann somit eine für einen Carport notwendige Größe leicht realisiert werden. Ferner wird durch die Flexibilität eines spannbaren Elements eine ausreichende Spannung erreicht, die Wind und Wetter trotzen kann.

Desweiteren kann das spannbare Element auch ein Netz aufweisen sowie als Netz ausgestaltet sein. Bei einer Kombination aus Folie, Plane, Netz, Gewebebahn und/oder Gewirke können sich weitere Vorteile ergeben. So ermöglicht beispielsweise eine Kombination aus einer dichten, wasserfesten Folie mit einem Netz, das Netz gezielt als Wasserablauf einzusetzen. Ferner kann ein abschnittsweise eingefügtes Netz nicht nur die Dichtigkeit der Folie unterbrechen, sondern zugleich zur Belüftung dienen, um Feuchtigkeit entweichen zu lassen. Gleichzeitig hat das Netz den Vorteil, Tieren, beispielsweise Vögeln, den Zugang zur Dachkonstruktion und somit den Zugang zu der Unterseite der Solarmodule mit den elektrischen Anschlüssen zu versperren.

Bei einer bevorzugten Ausgestaltung der Erfindung weist das spannbare Element an wenigstens einer seinen Seiten einen Keder auf. Vorzugsweise sind zwei Keder an zwei gegenüberliegenden Seiten eines spannbaren Elements angeordnet.

Günstigerweise weist die Dachkonstruktion oder der bzw. die Träger des Carports eine Aufnahmevorrichtung, insbesondere eine Kederschiene, auf, in die der Keder des spannbaren Elements einschiebbar ist. Auf diese Weise ist eine leichte und einfache Montage realisierbar, sowie ein leichter und schneller Austausch im Falle einer Beschädigung.

Aufgrund unterschiedlicher Temperaturen im Sommer und im Winter kann die Aufnahmevorrichtung eine Spanneinrichtung zum Spannen des spannbaren Elements aufweisen. Dies ermöglicht es, das spannbare Element beispielsweise in Ausführung einer Folie im Sommer nachzuspannen, wenn dieses aufgrund der erhöhten Temperaturen nötig erscheint.

Um einen Carport in öffentlichen Bereichen zu refinanzieren, kann es ebenfalls von Vorteil sein, einen Aufdruck bzw. eine Werbung auf das spannbare Element aufzubringen.

Aus dem gegenwärtiger Stand der Technik ist ferner bekannt, dass auf eine statische Konstruktion eines Carports - wie eingangs beschrieben - eine Dachunterkonstruktion bzw. eine Dachkonstruktion aufgebracht wird, um ein Blech und/oder Solarmodule zu tragen.

Die vorliegende Erfindung zielt insbesondere weiter darauf ab, auch durch einen möglichst einfachen Aufbau im Bereich der Dachkonstruktion den konstruktiven Aufbau eines Carports zu vereinfachen.

Gemäß einem weiteren Aspekt der vorliegenden Erfindung ist bei einem Carport zum Unterstellen eines Kraftfahrzeugs mit zumindest einem Träger und einer Dachkonstruktion, die zumindest ein am Träger angeordnetes Aussteifungselement aufweist, vorgesehen, wenigstens ein Solarmodul auf dem Aussteifungselement zu befestigen. Dies dient der Vereinfachung der Konstruktion eines Carports.

Folglich zielt der Erfindungsgedanke darauf ab, das Solarmodul direkt bzw. unmittelbar (ohne eine zusätzliche Unterkonstruktion) auf einem Aussteifungselement anzuordnen, um die Konstruktion zum einen zu vereinfachen und zum anderen dadurch Gewicht einzusparen.

Unter einer direkten bzw. unmittelbaren Befestigung von dem wenigstens einen Solarmodul an einem Aussteifungselement ist zu verstehen, dass das Solarmodul auf dem Aussteifungselement aufliegt, wobei es jedoch möglich ist, dass ein Abstandselement, wie beispielsweise eine Beilagscheibe, ein Abstandsgummi oder ein Abstandselement zwischen Solarmodul und Aussteifungselement angeordnet sein kann. Auch die Verwendung eines solchen Abstandelements zwischen Solarmodul und Aussteifungselement wird in diesem Zusammenhang von dem Begriff direkt bzw. unmittelbar umfasst. Auch wird eine Montage von einem Solarmodul ohne Beilagscheibe oder Abstandselement auf einem Aussteifungsträger unter den Begriffen direkt und unmittelbar verstanden.

Außerdem zielt die Erfindung darauf ab, die (statischen) Aussteifungselemente, die an einem Träger eines Carports befestigt sind, gleichzeitig als Trag- und Befestigungselement für Solarmodule zu verwenden. Dabei können die Größe bzw. die Profilart und - stärke der Aussteifungselemente nach der Größe der gewählten Solarmodule bemessen werden. Folglich sind auf der Dachkonstruktion verschiedene Modultypen einsetzbar. Aufgrund der Tatsache, dass der Markt von Solarmodulen von unterschiedlichen Herstellern bedient wird und dadurch Solarmodule unterschiedliche Maße aufweisen, ist es von Vorteil, wenn der Abstand zwischen zwei Aussteifungselementen auf das Maß eines Solarmoduls anpassbar ist. Folglich ist der erfindungsgemäße Carport vielseitig und für unterschiedlichste Solarmodulgrößen einsetzbar. Indem vorzugsweise Bohrungen für die Befestigung der jeweils gewählten Module zum Zeitpunkt des Aufbaus ausgeführt werden, ist die erfindungsgemäße Konstruktion leicht mit verschiedenen Modultypen einsetzbar.

Ferner kann das zumindest eine Aussteifungselement im rechten Winkel zum wenigstens einem Träger angeordnet sein, wobei jedoch auch andere Winkelstellungen denkbar sind. Hierbei kann die Winkelstellung von äußeren Gegebenheiten, wie einem angrenzenden Gebäude, beeinflusst werden, aber auch zur Erzielung eines optischen Design-Effekts genutzt werden.

Die Befestigung eines Solarmoduls an einem Aussteifungselement wird bevorzugterweise mittels mindestens einer Klemme oder Schiene realisiert. Diese kann so ausgestaltet sein, dass sie nicht nur ein Solarmodul, sondern gleichzeitig zwei benachbarte Solarmodule klemmt und auf einem Aussteifungselement befestigt werden kann. In einer konkreten Ausführung kann eine Klemme in Form eines "T" ausgebildet sein, wobei der Querstrich des "T" die Kanten der Module klemmt und der Längsstrich hohl ausgebildet ist, um eine Schraube aufzunehmen, die den Querstrich gegen ein Aussteifungselement spannt. Für die konkrete Ausgestaltung einer Klemme an einem Modul, das an kein weiteres Modul angrenzt, ist eine "L"-Form denkbar.

Vorzugsweise ist mindestens ein Dichtungselement auf dem Aussteifungselement angebracht.

Um bereits auf dem oberen bzw. dem äußeren Abschluss der Dachkonstruktion, also auf Seiten der Solarmodule, eine möglichst hohe Dichtigkeit gegen Regenwasser zu erreichen, ist es vorteilhaft, wenn die Dachkonstruktion zumindest zwei senkrecht zueinander stehenden Aussteifungselemente aufweist. Vorzugsweise ist dabei eines der beiden Aussteifungselemente am zumindest einen Träger des Carports angeordnet, wobei Dichtungselemente auf beiden Aussteifungselementen angebracht sein können. Auf diese Weise kann eine optimale Dichtigkeit zwischen Aussteifungselementen und Solarmodulen gewährleistet werden. Somit kann sowohl die Längs- (vertikale Seite, die parallel zu einem Träger verläuft) als auch die Querseite (horizontale Seite, die quer zu einem Träger verläuft) eines Solarmoduls optimal abgedichtet werden.

Für den Fall, dass zwei Solarmodule aneinander grenzen und entlang der Grenze der beiden Module bzw. unterhalb der verlaufenden Grenze kein Aussteifungselement vorhanden ist, ist es vorteilhaft, in diesem Grenz- bzw. Stoßbereich ein weiteres Dichtelement anzuordnen. Ein solches Element kann unterseitig der beiden aneinander grenzenden Solarmodule, oberseitig, aber auch zwischen beiden Modulen angebracht sein. Dabei kann das Dichtungselement ähnlich der zuvor beschriebenen Klemmen ausgeführt sein, also beispielsweise als "T", und so unterseitig gegen die Solarmodule gespannt werden.

In einer konkreten Ausgestaltung bedeutet das, dass zwei "T"-förmige Bauteile, also eine Klemme und ein Dichtungselement, sich gegenüberliegen, wobei beide so angeordnet sind, dass sie einen Doppel-T-Träger ähneln. Dabei kann das Dichtungselement beispielsweise eine Verbindungsmöglichkeit in Form eines Gewindes aufweisen, wodurch das Dichtungselement mittels der Klemme gegen die Unterseite eines Solarmoduls spannbar ist. In diesem Zusammenhang ist es nicht notwendig, dass eine Klemme dieselben Abmaße wie ein Dichtungselement aufweist, vielmehr weist bevorzugterweise eine Klemme kleinere Längenmaße auf, als ein Dichtungselement.

Zusammenfassend kann man festhalten, dass es günstig ist, Dichtungselemente zwischen oder unter den Solarmodulen anzuordnen. Der Vorteil von zwei aneinander grenzenden Solarmodulen und einem dazwischen oder darunter angeordneten Dichtungselement ist, dass eine derartige Anordnung eine Art Regenrinne bildet, in der das Wasser gezielt ablaufen kann.

Bevorzugterweise weist das zumindest eine Dichtungselement ein elastisches Material auf, wie beispielsweise Gummi, Moosgummi oder Neopren. Somit wird eine ausreichende Dichtigkeit der Dachkonstruktion erreicht. Die Anordnung von Dichtungselementen auf den Modulbefestigungsträgern-/elementen in der beschriebenen Weise ist auch bei einem herkömmlichen Solar-Carport möglich, bei dem nicht die Aussteifungselemente der Dachkonstruktion sondern Elemente einer Unterkonstruktion als Modulbefestigungsträger dienen.

Herkömmlich wird bei einem Carport mit Solarmodulen die Verkabelung aus dem Bereich unterhalb der Module an der Dachkonstruktion und/oder der Trägerkonstruktion nach unten geführt, wo sich die Anschlüsse für eine Solarstromeinspeisung befinden und weitere erforderliche elektrische Anschlüsse befinden. Dies setzt jedoch die elektrischen Anschlüsse der Witterung aus, wodurch diese schneller verschleißen.

Die vorliegende Erfindung zielt deshalb insbesondere weiterhin darauf ab, einen Carport anzugeben, welcher auch im Bereich der Verkabelung einen möglichst einfachen Aufbau gewährleistet und welcher Schutz der Verkabelung vor Witterungseinflüssen bietet.

Gemäß einem weiteren Aspekt der vorliegenden Erfindung ist bei einem Carport zum Unterstellen mindestens eines Kraftfahrzeugs mit zumindest einem Träger und einer Dachkonstruktion, auf der wenigstens ein Solarmodul befestigt ist, vorgesehen, dass der zumindest eine Träger ein Hohlprofil aufweist und eine Verkabelung von wenigstens einem Solarmodul von der Dachkonstruktion durch den Träger geführt wird.

Indem somit die Verkabelung in die Tragstruktur des Carports eingebaut wird, wird erreicht, dass elektrische Verbindungen und Anschlüsse nicht durch Witterungseinflüsse unterbrochen werden können. Auf diese Weise wird die Verkabelung auch vor weiteren Umwelteinflüssen wie Tieren, beispielsweise Mardern, geschützt. Außerdem ergibt sich auch daraus eine Gewichtseinsparung und eine damit verbundene Einsparung bei den Materialkosten, da zusätzliche Kabelführungen nicht notwendig sind.

Günstigerweise weist dafür der Träger zumindest einen Ein- und/oder Austritt für die Verkabelung auf. Dadurch, dass der Träger als Hohlprofil ausgeführt sein kann, beziehungsweise aus Trägerelementen mit Hohlprofil zusammengesetzt ist, dient dieses Profil gleichzeitig als Kabelführung. Als geeignetes Material für ein erfindungsgemäßes Hohlprofil können neben metallischen Materialien wie Stahl oder Aluminium zunehmend auch spezielle Kunststoffe Verwendung finden.

Somit zielt die Erfindung darauf ab, die Verkabelung in die Tragstruktur des Carports einzubauen. Die Kabel werden in die Träger (Hohlprofile) eingeführt und bis zu einem Fußpunkt geführt und mit den jeweils vor Ort vorzufindenden Anschlusskabeln verbunden. Nach Bedarf können Ein-/Austrittsöffnungen auch an anderen Bereichen, oberhalb des Fußpunkts, zum Beispiel im Bereich der Rückwand (gegenüber der Einfahrt) oder im Bereich seitlicher Träger angeordnet sein, wenn dort Kabelanschlüsse vorhanden sind.

Ferner kann, ebenfalls mindestens ein Aussteifungselement hohl ausgestaltet sein und dieses ebenfalls zumindest einen Ein- und/oder Austritt für eine Verkabelung aufweisen, um die Verkabelung bereits aus der unmittelbaren Umgebung der Solarmodule geschützt führen zu können.

Bevorzugterweise sind bei der Verwendung von Aussteifungselementen und einem Träger, wobei beide mit einem Hohlprofil ausgeführt sein können, die Austritte für die Verkabelung in den Aussteifungselementen im Bereich der Eintritte der Träger gelegen. Somit lässt sich eine witterungsgeschützte Verbindung von den Solarmodulen bis hin zu einem Anschluss, zum Beispiel an einem Fußpunkt eines Trägers realisieren.

Vorzugsweise wird die Verkabelung durch den Träger bis zu einer Austrittsöffnung im Bereich eines Fußpunktes des Trägers geführt und dort mit Anschlusskabeln verbunden.

Die Anschlusskabel können zu einer Solartankstelleneinheit für Elektrofahrzeuge und/oder einem Wechselrichter als Einspeisestelle für das öffentliche Stromnetz und/oder einem Speicher führen.

Im Rahmen der vorliegenden Erfindung können die einzelnen vorgenannten Merkmale eines Solar-Carports beliebig miteinander kombiniert oder einzeln verwendet werden, solange eine solche Kombination nicht zu Widersprüchen führt. So ist es zum Beispiel möglich, einen Carport mit einem spannbaren Element mit der speziellen Befestigung eines Solarmoduls an einem Aussteifungselement und/oder mit einer Führung der Verkabelung in einem als Hohlprofil ausgebildeten Träger zu kombinieren. Ferner ist zum Beispiel auch ein Carport mit Verkabelung im Träger möglich, bei dem die Solarmodule auf dem Aussteifungselement angebracht sind, aber kein spannbares Element wie zum Beispiel eine Plane vorgesehen ist.

Nachstehend wird die vorliegende Erfindung anhand von bevorzugten Ausführungsbeispielen in Verbindung mit beigefügten Zeichnungen näher erläutert. Es zeigen schematisch:
- Fig. 1a: eine Seitenansicht eines erfindungsgemäßen Carports mit einem spannbaren Element,
- Fig. 1b: eine Vorderansicht auf einen Carport mit einem spannbaren Element,
- Fig. 2a-c: eine perspektivische Ansicht auf eine Dachkonstruktion mit Solarmodulen,
- Fig. 3: ein Aussteifungselement, und
- Fig. 4: einen Carport in Seitenansicht mit Öffnungsbeispielen für Kabelführung.

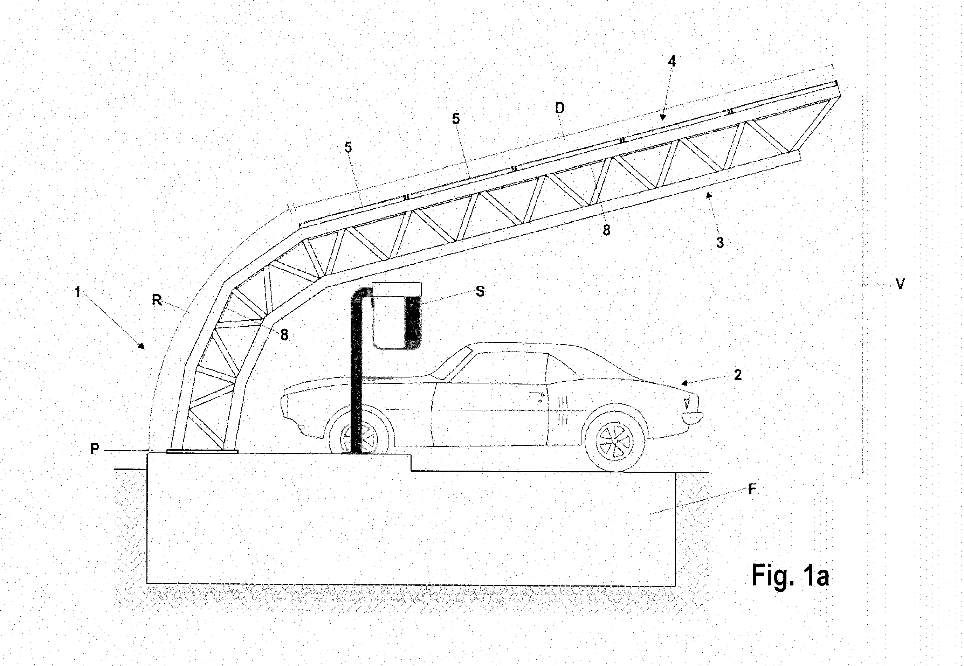

Figur 1a zeigt beispielhaft einen Carport 1 zum Unterstellen eines Kraftfahrzeugs 2, wobei der Carport 1 im Wesentlichen drei Bestandteile aufweist, nämlich ein Fundament F, einen Träger 3 und eine Dachkonstruktion 4.

Das Fundament F dient zur Aufnahme und Ableitung von Kräften. Ferner weist der Träger 3 drei Segmente auf, nämlich eine Fußplatte P, eine bogen- oder polygonförmig gebogene Rückseite R und eine dachtragenden geraden Abschnitt D, wobei auch in einem Bereich der Rückseite R Solarmodule angebracht sein können. Der Träger 3 ist mit der Fußplatte P direkt auf dem Fundament F befestigt, wodurch Wind-, Regen-Schnee- und Verkehrslasten, die auf die Dachkonstruktion 4 und somit auf den Träger 3 einwirken, flächig in das Fundament F eingeleitet werden können.

Der wesentliche Bestandteil des Trägers 3 setzt sich aus der bogenförmig, geschwungenen Rückseite R und dem dachtragenden Abschnitt D zusammen. Dabei ist der Träger 3 ähnlich einem Fachwerk ausgebildet, wobei die das Fachwerk bildenden Querverbindungen zwischen zwei im Wesentlichen parallel verlaufenden Längsstreben eingerahmt sind. Eine solch einfache Konstruktion des Trägers 3 mittels Fachwerkbauweise ermöglicht eine stabile und leichte Ausbildung des Carports.

Gegenüber der Rückseite R weist der Carport 1 eine offene Vorderseite V zum bequemen Ein- und Ausfahren eines Kraftfahrzeugs 2 auf.

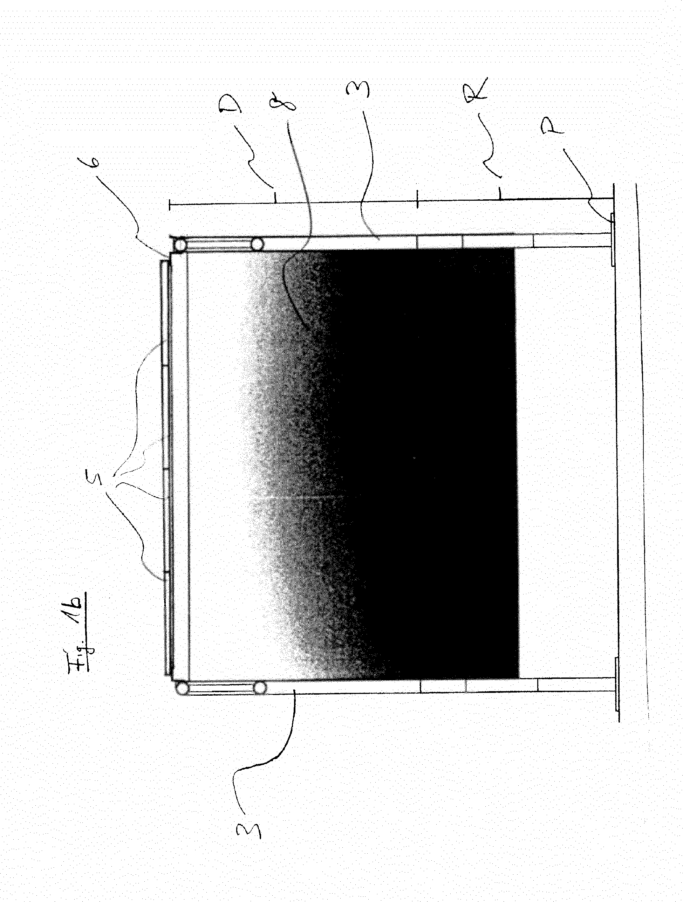

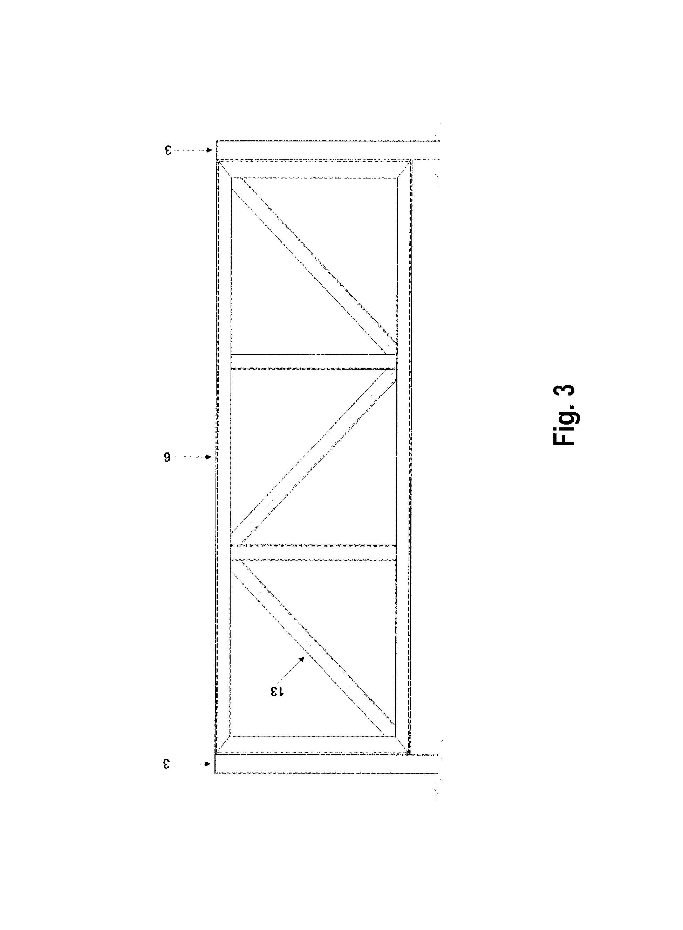

An dem dachtragenden Abschnitt D ist eine Dachkonstruktion 4 angebracht, auf der als oberer Abschluss Solarmodule 5 befestigt sind. Insbesondere kann bei einer bevorzugten Ausführungsform mit mindestens zwei Trägern 3 (wie in den Figuren 1b und 3 dargestellt) die Dachkonstruktion 4 zwischen den Trägern 3 angebracht sein.

Unterseitig der Dachkonstruktion 4, also auf der gegenüberliegenden Seite der Solarmodule 5, ist sowohl im dachtragenden Abschnitt D als auch entlang der Rückseite R ein spannbares Element 8 angeordnet, das einen unteren bzw. inneren Abschluss der Dachkonstruktion 4 bildet. Dementsprechend bilden die auf der Dachkonstruktion 4 angeordneten Solarmodule 5 einen oberen bzw. äußeren Abschluss.

Je nach individueller Ausgestaltung eines Carports 1 ist es möglich, das spannbare Element 8 an der Rückseite R auszusparen, was durch die gestrichelte Linie angedeutet ist. Folglich erstreckt sich in der hier konkret dargestellten Ausführung das spannbare Element 8 lediglich unterhalb des dachtragenden Abschnitts D des Trägers 3.

Des Weiteren ist in Figur 1 a eine Ladebox (Solartankstelle) S dargestellt. Dies dient dem "Laden" eines Elektrofahrzeugs mit Energie, die von den Solarmodulen 5 der Dachkonstruktion 4 gewonnen wurde. Auch ein Wechselrichter kann erzeugte Energie in das öffentliche Stromnetz einspeisen.

Figur 1b zeigt eine Vorderansicht eines Carports 1 aus Figur 1a mit Blickrichtung auf die Rückseite R und auf die Unter- bzw. Innenseite der Dachkonstruktion 4.

In Figur 1b ist ferner dargestellt, dass der Carport 1 zwei Träger 3 aufweist, die in einem Abstand zueinander angeordnet sind, der zumindest der Breite eines PKW's entspricht. Die Breite bzw. der Abstand zwischen den Trägern 3 kann dabei beliebig gewählt werden. Jeder der Träger weist die Fußplatte P, eine Rückseite R und einen dachtragenden Abschnitt D auf. Dabei ist gut zu erkennen, dass die Träger 3 ein Hohlprofil und ein Fachwerk aufweisen.

Auch ist das spannbare Element 8 dargestellt, das zwischen den Trägern 3 gespannt ist. Um eine möglichst hohe Dichtigkeit des Elements 8 gegen Regenwasser zu erreichen, kann dieses als Folie, Plane, Gewebebahn und/oder Gewirke ausgebildet sein. Idealerweise weist das spannbare Element 8 flexible Eigenschaften auf, die es ermöglichen, der bogen- bzw. polygonförmigen Kontur des Trägers 3 zu folgen. Um Be- und Entlüftungsmöglichkeiten zwischen der Dachkonstruktion 4 und/oder dem oberen Abschluss mit den Solarmodulen 5 und einem spannbaren Element zu schaffen, ist es von Vorteil, wenn die wetterfeste Folie, Plane, Gewebebahn oder das wetterfeste Gewirke an ausgewählten Stellen ein Netz aufweist. Dies ermöglicht es, an den Stellen mit Netz einen Wasserablauf zu gestalten. Ferner dient eine solche Ausbildung als Belüftung, die ein Entweichen von Feuchtigkeit erlaubt.

Dabei hat das Netz den Vorteil beispielsweise Vögeln, den Zugang zur Dachkonstruktion und somit den Zugang zu der Unterseite der Solarmodule mit den elektrischen Anschlüssen zu verweigern. Selbstverständlich ist es auch möglich, anstelle einer Folie nur ein Netz anzubringen, falls dies gewünscht wird.

Des Weiteren ist in Figur 1b ein am Träger 3 angeordnetes Aussteifungselement 6 dargestellt. Dabei sind Solarmodule 5 auf dem einen dargestellten Aussteifungselement 6 befestigt. Diese sind direkt bzw. unmittelbar an dem Aussteifungselement 6 angeordnet. Unter einer direkten bzw. unmittelbaren Anordnung von Solarmodulen an einem Aussteifungselement ist zu verstehen, dass die Solarmodule auf dem Aussteifungselement aufliegen. Jedoch kann ein Abstandselement, wie beispielsweise eine Beilagscheibe, ein Abstandsgummi oder ein Abstandselement zwischen Solarmodul und Aussteifungselement angeordnet sein. Die Verwendung eines solchen Abstandelements zwischen Solarmodul und Aussteifungselement ist in diesem Zusammenhang von direkt bzw. unmittelbar umfasst. Auch das Weglassen von Beilagscheibe oder Abstandselement unter den Begriffen direkt und unmittelbar verstanden.

Die Befestigung des an dem Träger 3 angeordneten Aussteifungselements 6 kann mittels einer Schraubverbindung realisiert werden.

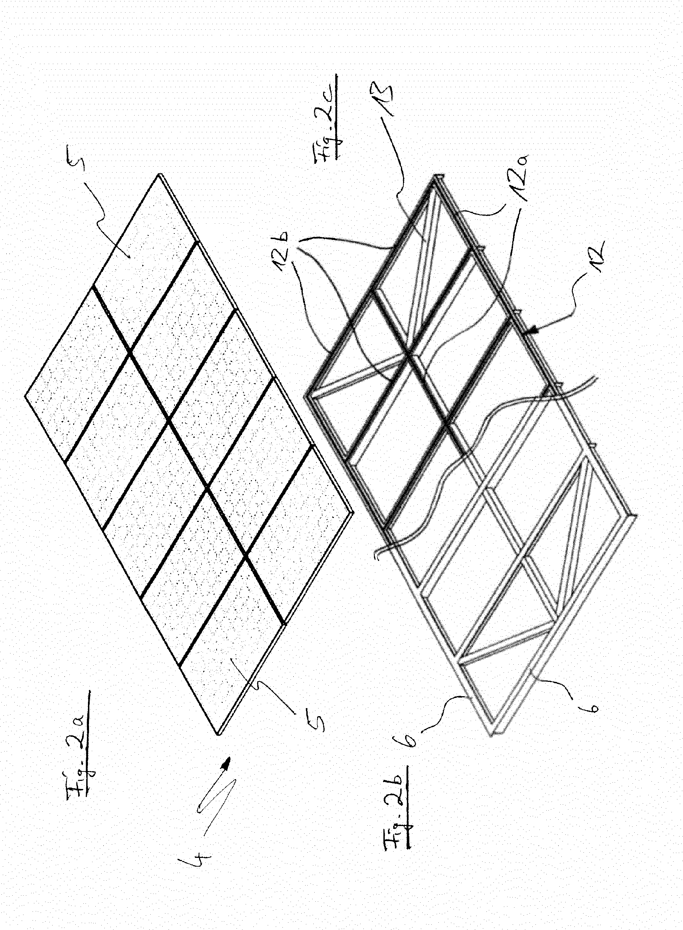

Eine anschaulichere Darstellung der angesprochenen Anordnung der Solarmodule 5 auf einem Aussteifungselement 6 zeigen Figuren 2a-c. Dabei weist die Dachkonstruktion 4 aus Figuren 2a-c in Figur 2a Solarmodule 5 auf, die auf den Aussteifungselementen 6 angeordnet sind.

Figur 2b sowie Figur 2c zeigen einen mögliche Dachkonstruktion 4, wobei die Solarmodule 5 nur in Figur 2a dargestellt sind, mit senkrecht zueinander stehenden Aussteifungselementen 6. Hierbei bilden die zueinander senkrecht stehenden Aussteifungselemente 6 jeweils einen Rahmen in der Größe mindestens eines Solarmoduls 5. Somit kann auf die jeweilige Größe eines Solarmoduls 5 eines beliebigen Herstellers eingegangen werden.

Folglich ist der Abstand zwischen zwei Aussteifungselementen 6 auf das Maß eines Solarmoduls 5 anpassbar. Um die Solarmodule 5 an einem Aussteifungselement 6 zu befestigen, kann eine Klemme oder Schiene (nicht dargestellt) verwendet werden. Diese wird auf der Oberseite der Solarmodule 5, insbesondere zwischen zwei aneinandergrenzenden Modulen 5 aufgesetzt und mit einem Aussteifungselement 6 verbunden. Somit werden die Solarmodule 5 gegen ein Aussteifungselement 6 gespannt.

Figur 2c zeigt einen Teil der Dachkonstruktion 4 mit senkrecht zueinander stehenden Aussteifungselementen 6, wobei Dichtungselemente 12 auf den Aussteifungselementen 6 angeordnet sind. Derartig angeordnete Dichtungselemente 12 auf horizontal und vertikal verlaufende Aussteifungselemente 6 ermöglichen eine gute Abdichtung der Dachkonstruktion 4 gegen beispielsweise Regenwasser. Somit sind vertikale 12a und horizontale 12b Dichtungselemente auf den dementsprechenden Aussteifungselementen 6 angeordnet. Als Dichtungsmaterial eignet sich ein elastisches Material, wie beispielsweise Gummi, Moosgummi oder Neopren oder ein gleichwertiger Werkstoff, der ein Eindringen von Wasser auf die Unterseite, also auf die der Solarmodule gegenüberliegende Seite der Dachkonstruktion 4, verhindert.

In einer alternativen Ausführungsform ist es möglich, lediglich Aussteifungselemente 6 anzubringen, die zwei Träger 3 miteinander verbinden, also nur horizontal angeordnete Aussteifungselemente 6. Somit kann auf parallel zum Träger 3 verlaufende Aussteifungselemente 6 verzichtet werden. Dies bedeutet eine Kosten- sowie eine Materialeinsparung.

Ferner zeigen Figur 2b und Figur 2c, dass auch innerhalb der Dachkonstruktion zwischen zwei senkrecht zueinander stehenden Aussteifungselementen 6 diagonale Streben 13 von Aussteifungselementen angeordnet werden können. Dies dient der Versteifung der Konstruktion.

Figur 3 zeigt einen Teil einer Dachkonstruktion 4 mit Aussteifungselementen 6 und Querstreben 13 in einer alternativen Ausführungsform zu der in Figur 2 gezeigten. Wie in Figur 3 dargestellt, sind die Aussteifungselemente 6 mit einem L-Profil ausgeführt. Der Vorteil eines solchen L-Profils liegt darin, dass es ausreichende Steifigkeit aufweist. An den kurzen Seiten des dargestellten verstärkten Endstücks von Aussteifungselementen 6 mit Querstreben 13, wie es ähnlich in Figur 2b und 2c dargestellt ist, ist jeweils ein Träger 3 bzw. jeweils ein Hohlprofil des Trägers 3 befestigt. Ein weiterer Vorteil des L-Profils liegt darin, dass auf den L-Seiten ausreichend Bauraum zur Verfügung gestellt ist, um Solarmodule aufzulegen bzw. zu befestigen und Dichtungselemente 12 anzubringen.

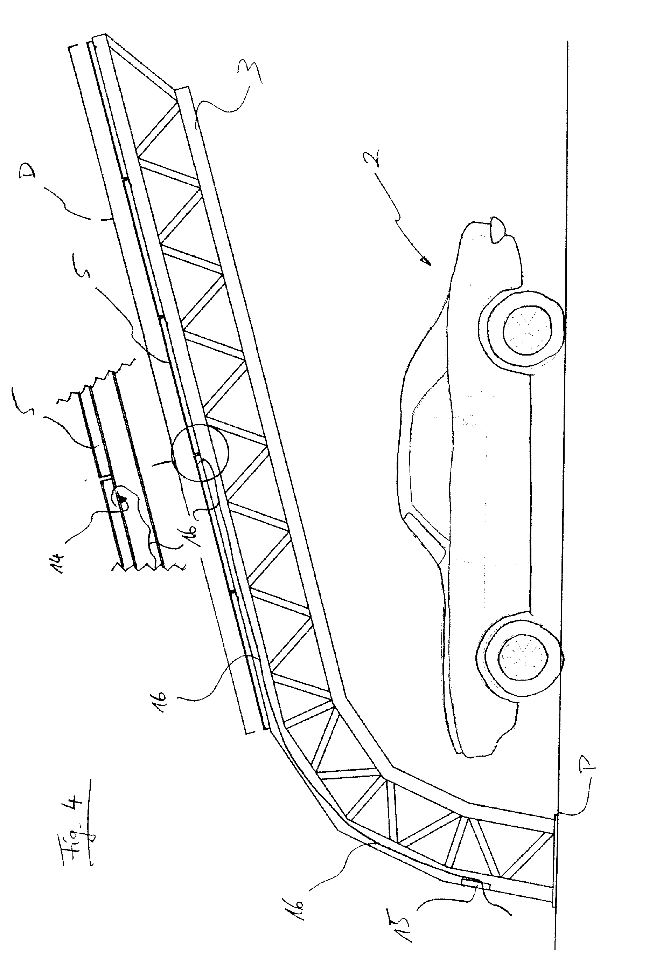

Figur 4 zeigt einen Carport 1 zum Unterstellen eines Kraftfahrzeugs 2 mit zumindest einem Träger 3 und einer Dachkonstruktion 4, auf der Solarmodule 5 befestigt sind, wobei der Träger 3 Hohlprofile aufweist. Ferner ist dargestellt, wie eine Verkabelung 16 mindestens eines Solarmoduls 5 oder Sammelleitungen der Dachkonstruktion 4 durch den Träger 3 geführt werden. Hierzu ist auf mindestens einer Seite des oberen Hohlprofils des Trägers 3 ein Eintritt 14 im dachtragenden Abschnitt D vorgesehen und in demselben Hohlprofil des Trägers 3 ein Austritt 15 vorgesehen. Der Austritt 15 kann am Fußpunkt des Trägers 3 bzw. in der Nähe der Fußplatte P angebracht werden. Auch kann es nützlich sein, den Austritt auf eine angenehme Arbeitshöhe zu verlegen, wodurch er dann beispielsweise an der Rückseite R angeordnet wäre. Der Austritt 15 kann auch unter oder in der Fussplatte liegen und unter der Erde bzw. im Fundament verbunden werden. Auf jeden Fall wird eine durchgängige Verbindung vom Austritt 15 am Träger 3 bis hin zu den Solarmodulen 5 gewährleistet ist. Die am Austritt 15 durchgeführt Verkabelung kann an einem Wechselrichter, einer Solartankstelleneinheit bzw. Anschlussleitungen angebunden werden (nicht dargestellt).

Zusammenfassend, betrifft die vorliegende Erfindung einen verbesserten Carport mit auf dem Dach angeordneten Solarmodulen. Durch eine einfache Konstruktion, bei der die tragenden Teile zusätzliche Funktionen übernehmen, kann der erfindungsgemäße Solar-carport besonders kostengünstig hergestellt werden und bietet gleichzeitig einen verbesserten Wetterschutz. Vorzugsweise ist weiterhin eine Plane als innerer Abschluss des Carports vorgesehen.

### Bezugszeichenliste

- 1: Carport
- 2: Kraftfahrzeug
- 3: Träger
- 4: Dachkonstruktion
- 5: Solarmodul
- 6: Aussteifungselement
- 8: spannbares Element
- 12: Dichtungselement
- 12a: vertikales Dichtungselement
- 12b: horizontales Dichtungselement
- 13: Diagonalstrebe
- 14: Eintritt/Einlass
- 15: Austritt/Auslass
- 16: Verkabelung
- F: Fundament
- P: Fußplatte
- R: Rückseite
- D: dachtragender Abschnitt
- V: Vorderseite
- S: Solartankstelle

## Patentansprüche

1. Carport (1) zum Unterstellen eines Kraftfahrzeugs (2) mit zumindest einem Träger (3) und einer Dachkonstruktion (4), wobei auf der Dachkonstruktion (4) wenigstens ein Solarmodul (5) befestigt ist, und einem spannbaren Element (8), welches einen unteren Abschluss der Dachkonstruktion (4) bildet.

2. Carport (1) nach Anspruch 1, wobei das spannbare Element (8) eine Folie, eine Plane, eine Gewebebahn, ein Netz und/oder ein Gewirke aufweist.

3. Carport (1) nach Anspruch 1 oder 2, wobei das spannbare Element (8) flexibel und/oder wetterfest ausgebildet ist.

4. Carport (1) zum Unterstellen eines Kraftfahrzeuges (2) mit zumindest einem Träger (3) und einer Dachkonstruktion (4), die mindestens ein am Träger (3) angeordnetes Aussteifungselement (6) aufweist, wobei auf dem Aussteifungselement (6) wenigstens ein Solarmodul (5) befestigt ist.

5. Carport (1) nach Anspruch 4, wobei der Abstand zwischen zwei Aussteifungselementen und/oder die Größe der Aussteifungselemente (6) auf die Maße eines Solarmoduls (5) anpassbar sind.

6. Carport (1) nach Anspruch 4 oder 5, wobei die Solarmodule mittels einer Klemme oder Schiene an mindestens einem Aussteifungselement (6) befestigt sind.

7. Carport (1) nach zumindest einem der vorhergehenden Ansprüche 4 bis 6, wobei mindestens ein Dichtungselement (12) auf dem Aussteifungselement (6) angebracht ist.

8. Carport (1) nach Anspruch 7, wobei die Dachkonstruktion (4) mindestens zwei senkrecht zueinander stehende Aussteifungselemente (6) aufweist, von denen eines am Träger (3) angeordnet ist, wobei Dichtungselemente (12) auf beiden Aussteifungselementen (6) angebracht sind.

9. Carport (1) nach Anspruch 7 oder 8, wobei mindestens ein Dichtungselement (12) ein elastisches Material aufweist.

10. Carport (1) zum Unterstellen eines Kraftfahrzeugs (2) mit zumindest einem Träger (3) und einer Dachkonstruktion (4), auf der wenigstens ein Solarmodul (5) befestigt ist, wobei der zumindest eine Träger (3) Hohlprofile aufweist, und eine Verkabelung des wenigstens einen Solarmoduls (5) von der Dachkonstruktion (4) durch den Träger (3) geführt wird.

11. Carport (1) nach Anspruch 10, wobei die Verkabelung durch den Träger (3) bis zu einer Austrittsöffnung im Bereich eines Fußpunkts des Trägers geführt wird und dort mit Anschlusskabeln verbunden wird.
